(19) Europäisches Patentamt / European Patent Office / Office européen des brevets

(11) **EP 2 788 246 B1**

(12) **FASCICULE DE BREVET EUROPEEN**

(45) Date de publication et mention
de la délivrance du brevet:
**09.03.2016 Bulletin 2016/10**

(51) Int Cl.:
**B62D 15/02** <sup>(2006.01)</sup>

(21) Numéro de dépôt: **12810335.5**

(86) Numéro de dépôt international:
**PCT/FR2012/052791**

(22) Date de dépôt: **04.12.2012**

(87) Numéro de publication internationale:
**WO 2013/083907 (13.06.2013 Gazette 2013/24)**

(54) **PROCEDE D'AIDE AU PARCAGE POUR UN VEHICULE AUTOMOBILE**

PARKHILFEVERFAHREN FÜR EIN KRAFTFAHRZEUG

PARKING ASSISTANCE METHOD FOR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.12.2011 FR 1161226**

(43) Date de publication de la demande:
**15.10.2014 Bulletin 2014/42**

(73) Titulaire: **Renault S.A.S.**
**92100 Boulogne-Billancourt (FR)**

(72) Inventeur: **MARTIN, Guillaume**
**F-78000 Versailles (FR)**

(56) Documents cités:
**EP-A1- 1 955 904        EP-A1- 2 060 465**
**US-A1- 2004 201 670    US-A1- 2009 123 028**
**US-A1- 2011 006 917    US-A1- 2011 175 714**

EP 2 788 246 B1

**Description**

L'invention se rapporte au domaine des procédés d'aide au parcage pour véhicule automobile dans des emplacements de stationnement délimités par des lignes de marquage au sol, notamment pour les parcages de type bataille ou épis, Plus particulièrement l'invention se rapporte au parcage de véhicule électrique comportant une bobine dédiée à la charge sans contact et aux emplacements comportant une bobine dédiée à la charge.

La demande de brevet EP-A2-2 093 129 divulgue un système de caméra latéral permettant d'identifier les lignes blanches délimitant un emplacement de stationnement. A partir de l'identification des lignes, le système détermine la position et l'orientation du véhicule par rapport à l'emplacement. Le système calcule, ensuite, les trajectoires associées aux manoeuvres pour que le véhicule puisse atteindre la position de stationnement voulue. Un système additionnel de caméras frontale et arrière, et des capteurs à ultrasons latéraux permet de guider le conducteur en cas de défaillance de l'algorithme de reconnaissance de lignes.

Dans ce document, il est précisé que le calcul de l'angle est basé sur la séquence suivante:

- détection d'une ligne de parking à partir d'un flux vidéo,
- son extraction par traitement de l'image,
- le redressement de l'image (correction des distorsions),
- calcul de l'angle en utilisant les coordonnées de la ligne extraite.

L'inconvénient de ce type de procédé est le nombre de capteurs et de calculateurs à intégrer au véhicule qui rend le coût de fabrication d'un tel système extrêmement élevé. Le système nécessite un calculateur uniquement dédié à la fonction d'aide au parcage car les temps de temps de calcul sont conséquents. Il n'est pas possible d'utiliser le procédé d'aide au parcage pour un véhicule équipé d'une unique caméra située en position centrale arrière. Enfin, la précision finale à la suite de la manoeuvre n'est pas garantie, car seule l'orientation finale du véhicule est considérée.

Le but de l'invention est de proposer un procédé obviant à ces inconvénients, c'est-à-dire un procédé qui soit applicable au véhicule équipé de caméras latérales ou d'une caméra centrale arrière, et dont la mise en oeuvre (du procédé) nécessite moins de ressource en temps de calcul.

Le document EP 1 955 904 A1, considéré comme l'état de la technique le plus proche de l'objet de la revendication 1, divulgue un procédé d'aide au parcage selon le préambule de la revendication 1.

Dans ce but, l'invention propose un procédé d'aide au parcage pour un véhicule automobile dans un emplacement de stationnement disponible, du type épis ou bataille, délimité par des lignes de marquage au sol comportant au moins une caméra. Selon l'invention le procédé comporte :

- une étape d'affichage de l'emplacement et d'une cible sur une interface homme-machine, ledit emplacement de stationnement étant disposé sur l'un des cotés de la voie de circulation,

- une étape d'alignement de la cible avec l'une des lignes de marquage au sol,

- une étape de validation de l'alignement de la cible avec la ligne de marquage, l'étape d'alignement de la cible étant répétée tant que malignement n'est pas validé,

- une étape d'acquisition par un système de l'image affiché sur l'interface homme machine,

- une étape de détermination, à partir de l'image acquise, d'un décalage angulaire $\theta$ entre l'orientation longitudinale du véhicule par rapport à la voie de circulation, au droit de l'emplacement,

- une étape de calcul d'une trajectoire entre la position courante du véhicule et une position dans l'emplacement de stationnement, cette trajectoire dépendant du décalage angulaire déterminé.

Ce qui présente l'avantage de pouvoir implémenter ce procédé dans un calculateur quelle que soit l'implantation du dispositif de caméra (latérales ou centrale arrière).

L'étape de détermination du décalage angulaire peut comporter une étape de recherche de l'extrémité libre de ligne (9) alignée avec la cible.

Selon un aspect complémentaire de l'invention l'étape de recherche de l'extrémité libre peut comporter une comparaison de la forme de l'extrémité à une base de données. Ceci a pour avantage de pouvoir associer le type de manoeuvre de parcage (bataille ou épis) à une ou plusieurs forme(s) d'extrémité(s).

En complément, l'étape de détermination du décalage angulaire peut comporter une étape de recherche de l'autre extrémité libre de la ligne de marquage au sol.

Selon un aspect de l'invention, l'étape de détermination du décalage angulaire peut comporter une étape d'extraction d'une partie de l'image comportant une partie de la ligne. Ceci permet de réduire les besoins de ressource en mémoire et en charge de calcul.

L'étape de détermination du décalage angulaire peut comporter une étape de détermination des coordonnées d'au moins deux points compris sur la ligne de marquage au sol dans l'image extraite. Ceci présente l'avantage de réduire le besoin en temps de calcul du calculateur.

L'étape de détermination du décalage angulaire peut comporter une étape de correction de l'effet de perspective.

L'étape de détermination du décalage angulaire peut comporter une étape de calcul du décalage angulaire à partir des coordonnées corrigées.

Selon une variante, l'étape d'affichage peut comporter une étape de détermination du coté du véhicule où se situe l'emplacement par l'activation de l'un des clignotants par le conducteur.

En variante, l'emplacement et le véhicule peuvent comporter chacun des moyens de charge sans contact coopérant entre eux.

D'autres caractéristiques et avantages de l'invention apparaîtront à la lecture de la description détaillée qui va suivre, donnée à titre d'exemple non limitatif. Pour sa compréhension, on se reportera aux dessins annexés dans desquels

- La figure 1 est une représentation schématique d'un procédé de parcage en bataille d'un véhicule dans le cas nominal ;

- La figure 2 est une représentation des manoeuvres effectuées au cours du procédé de la figure 1 ;

- La figure 3 est une représentation schématique d'un véhicule selon l'invention ;

- La figure 4 est une représentation des étapes du procédé d'aide au parcage du véhicule dans un emplacement de stationnement, selon un mode de réalisation principal ;

- Les figures 5a et 5b sont des représentations schématiques de l'étape d'alignement d'une cible avec une ligne de marquage au sol de l'emplacement selon deux modes de réalisation ;

- La figure 6 est une représentation de l'extraction d'une partie de l'extrémité de la ligne ainsi que de l'extraction de détermination des coordonnés de deux points ;

- La figure 7 est une représentation de la figure 6 après correction de l'effet de perspective

- La figure 8 est une représentation d'une base de données, selon un mode de réalisation complémentaire, comportant différent type d'extrémités ;

- La figure 9 est une représentation schématique de la position du véhicule dans un cas usuel ainsi que les manoeuvres associées aux procédé selon l'invention ;

- La figure 10 est une représentation schématique des paramètres propres à une caméra latérale ainsi que les chemins optiques associés ;

- La figure 11 est une représentation schématique en vue de dessus de la figure 10 ;

- La figure 12 est une représentation schématique de la correction de distance à parcourir lors de la première manoeuvre ;

- La figure 13 est une représentation schématique analogue à la figure 11 pour un mode de réalisation avec une caméra centrale arrière ;

- La figure 14 est une représentation schématique de l'étape d'alignement d'une cible avec une ligne de marquage au sol de l'emplacement et de l'étape de recherche des extrémités des lignes, selon un mode de réalisation alternatif ;

- La figure 15 est une représentation d'un mode de réalisation alternatif de l'étape de détermination du décalage angulaire,

- La figure 16 est une représentation d'une ligne de marquage au sol distordue, due à l'effet de perspective de la caméra.

On adoptera comme définition qu'une zone de parcage est un lieu dans lequel se trouvent plusieurs emplacements ou places de stationnement délimitées par des lignes 9 de marquages au sol, les lignes 9 étant situées de part et d'autre d'un même l'emplacement. Les places de stationnement sont situées sur au moins un coté de la voie de circulation.

Le parcage en bataille correspond aux emplacements s'étendant perpendiculairement au sens de circulation, c'est-à-dire les lignes 9 de marques au sol forment un angle droit par rapport à la voie où évolue le véhicule 1. Dans le cas d'un parcage en épis, les lignes 9 de marquages au sol forment un angle d'environ 30° par rapport à la voie de circulation, cet angle étant donné à titre d'exemple non limitatif.

La description détaillée qui va suivre porte sur un procédé d'aide au stationnement d'un véhicule 1 automobile évoluant dans une zone de parcage. Ce procédé permet de déterminer le décalage angulaire θ entre l'orientation longitudinale du véhicule 1 par rapport à la voie de circulation, au droit de l'emplacement 3 de stationnement disponible et de pouvoir calculer à partir du décalage angulaire θ la trajectoire de la manoeuvre du véhicule 1 d'une position courante initiale vers une position de stationnement désirée.

La description détaillée qui va suivre portera dans un premier temps sur la détermination du décalage angulaire θ puis sur le calcul, qui tient compte du décalage angulaire θ, des trajectoires du véhicule 1 au cours des différentes manoeuvres.

Un second aspect de ce procédé est qu'il peut également s'appliquer au parcage d'un véhicule 1 électrique équipé d'un dispositif de charge sans contact dans un emplacement 3 de stationnement équipé d'un dispositif de charge sans contact complémentaire à celui du véhicule 1.

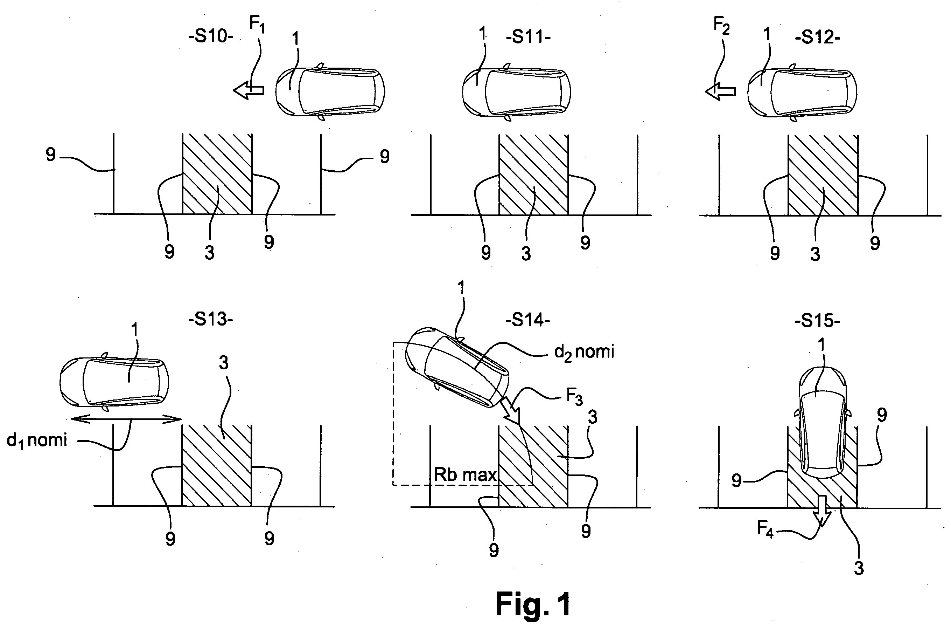

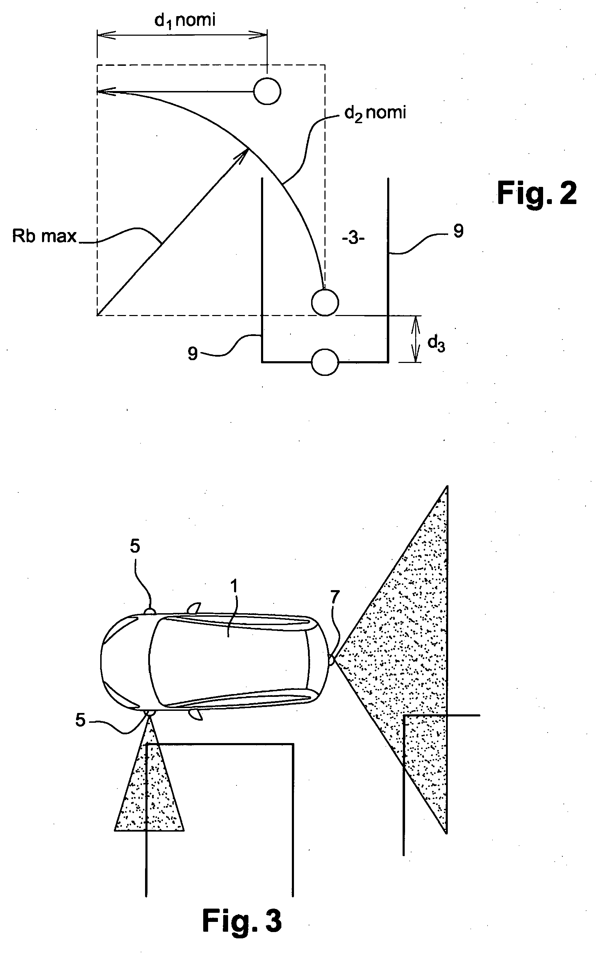

Tout d'abord, Il va être décrit un cas nominal, tel que représenté aux figures 1 et 2, de parcage en bataille afin de mieux comprendre l'invention.

Dans le cas nominal d'un parcage en bataille, le procédé pour garer le véhicule 1 comporte :

- une étape S10 d'approche, suivant la flèche F1, du véhicule 1 à proximité de l'emplacement 3 de stationnement disponible,
- une étape S11 d'arrêt du véhicule 1 parallèlement à voie de circulation du véhicule,
- une étape S12 d'une première manoeuvre en marche avant, suivant F2, roues parallèles entre elles sur une distance
- une étape S13 consistant à parcourir une distance d1nomi, la distance d1nomi dépend directement de la structure du véhicule 1 (rayon de braquage des roues, empattement,..) et peut être obtenue par calcul ou par expérimentation,
- une étape S14 d'une deuxième manoeuvre de braquage des roues au maximum Rbmax du coté où est situé la place de stationnement, cette manoeuvre s'effectuant en marche arrière sur une trajectoire représentant un quart de cercle, le véhicule parcourt une certaine distance d2nomi, suivant F3, jusqu'à ce que son alignement soit correct. Dû au braquage à fond, la trajectoire de recul est un arc de cercle, à rayon constant (aux dispersions près).
- une étape S15 d'une troisième manoeuvre consistant à redresser les roues de sorte qu'elles soient parallèles entre elles, puis à reculer parallèlement aux lignes 9 droite d'une distance d3 suivant la flèche F4.

Dans les modes de réalisations représentés la zone de parcage est une zone de parcage en bataille.

En général dans le cas d'une zone de parcage en bataille ou en épis, le véhicule 1 n'est pas toujours positionné parallèlement à la voie de circulation du véhicule 1. Ce décalage angulaire θ se traduit par un décalage des points de repères du véhicule 1 par rapport à l'emplacement 3, donc le calcul des trajectoires est déjà entaché d'erreur avant qu'il y ait eu la moindre manoeuvre.

La mise en oeuvre du procédé nécessite des capteurs de vitesse roue, un capteur d'angle volant, des clignotants ainsi que la commande associée, une interface homme machine appelée IHM (type écran LCD), un calculateur et un réseau électrique de type CAN reliant ces différents éléments. La mise en oeuvre du procédé nécessite que le véhicule 1 comporte, comme représenté à la figure 3:

- deux caméras latérales 5,
- ou une caméra de recul 7.

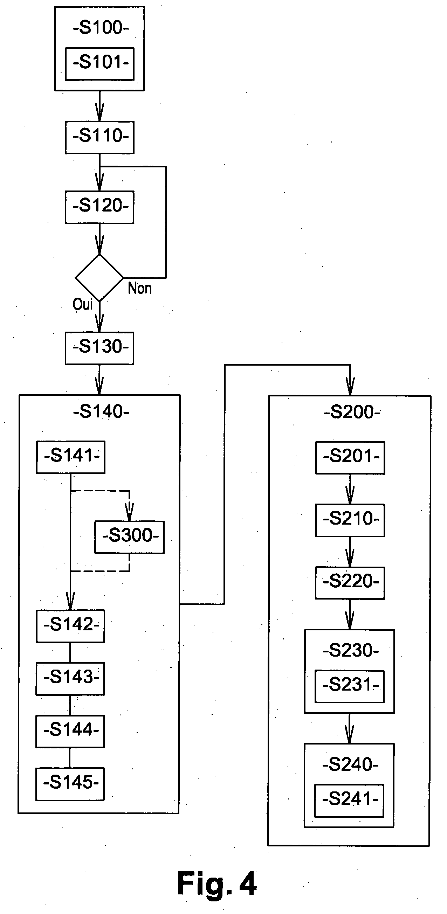

Dans l'exemple représenté aux figures 3 à 9, le véhicule 1 comporte deux caméras latérales 5 disposées de part et d'autre du véhicule 1. Le calculateur met en oeuvre le procédé d'aide au parcage, tel que représenté à la figure 4. Le procédé comporte une étape S100 d'affichage, à l'approche d'un emplacement 3 délimité par des lignes 9 de marquage au sol, de l'emplacement 3 et d'une cible 11 sur une interface homme-machine.

Dans la suite du document, on entendra par « emplacement » un emplacement de stationnement disponible.

L'étape d'affichage S100 comporte une sous étape S101 de détermination de la position de l'emplacement 3 par rapport aux cotés du véhicule 1, Cette étape S101 est réalisée par un contrôle sur la commande des clignotants, le coté où est activé un clignotant indique le coté repéré par le conducteur où est situé l'emplacement 3. Ainsi dans le procédé de l'invention, l'activation du clignotant par le conducteur commande la sélection de la caméra disposée du coté de l'emplacement 3. Dans le mode de réalisation représenté, la cible 11 est fixe par rapport à l'interface homme machine, c'est-à-dire que la cible 11 est toujours représentée au même endroit sur l'écran quelque soit la position ou le mouvement du véhicule 1.

Dans le mode de réalisation représenté, la cible 11 est fixe et le procédé comporte une étape S110 d'alignement de la cible 11 avec l'une des lignes 9 de marquage au sol, cet alignement est obtenu par le conducteur en déplaçant le véhicule 1.

Le procédé comporte une étape S120 de validation de l'alignement de la cible 11 avec la ligne 9 de marquage, l'étape S110 d'alignement de la cible 11 étant répétée tant que l'alignement n'est pas validé.

Le procédé comporte une étape S130 d'acquisition par un système de l'image affichée sur l'interface homme machine.

Le procédé comporte une étape S140 de détermination, à partir de l'image acquise à l'étape S130, du décalage angulaire θ entre l'orientation longitudinale du véhicule 1 dans sa position à l'étape S130, et la ligne 9 de marquage au sol alignée avec la cible 11.

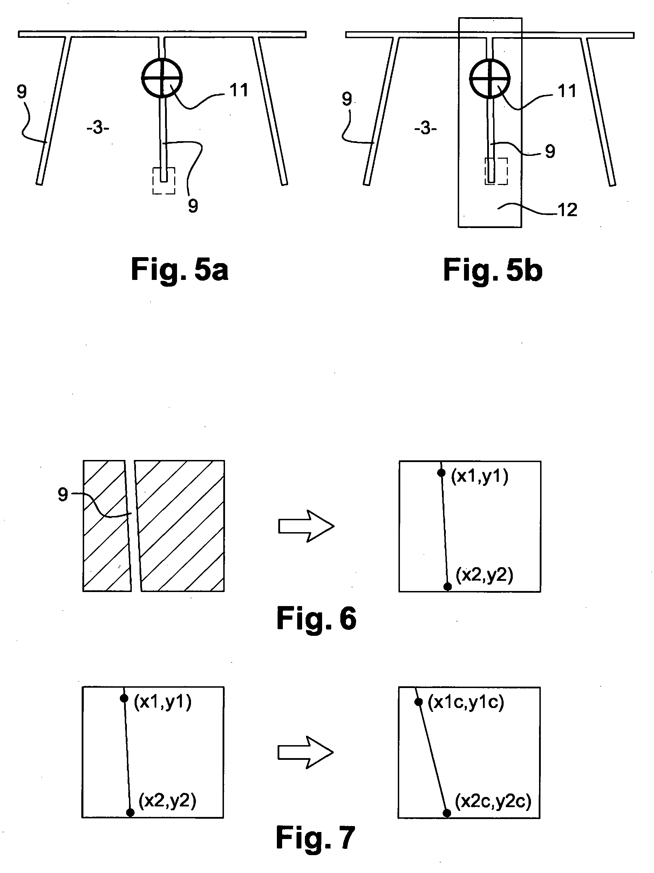

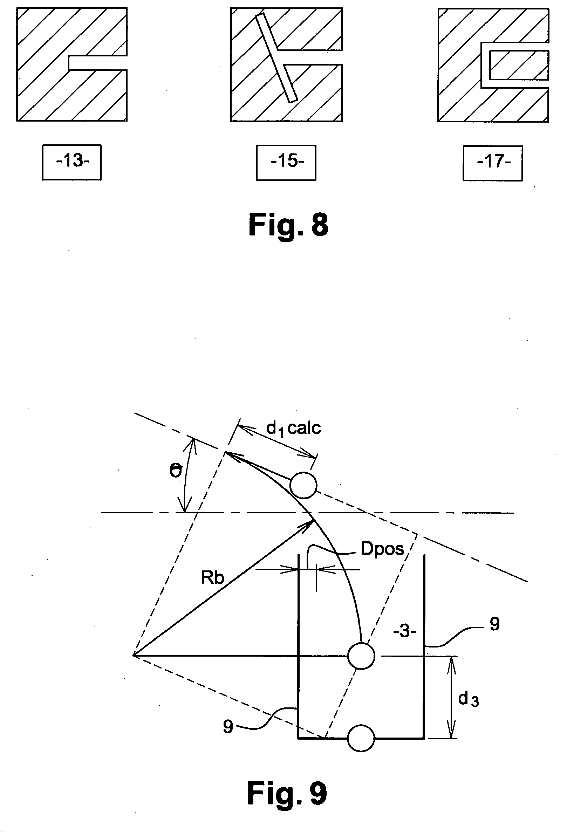

Comme représenté aux figures 5 à 7, l'étape S140 de détermination du décalage angulaire θ (figure 9) comporte une étape S141 de recherche de l'extrémité libre de la ligne 9 de marquage au sol alignée avec la cible 11. L'étape S141 de recherche de l'extrémité libre peut être réalisée, par exemple, par un algorithme de corrélation croisé en 2D.L'étape S140 de détermination du décalage angulaire θ (figure 9) comporte, en outre, une étape S142 d'extraction d'une partie de l'image comportant une partie de la ligne 9. Une fois cette étape S142 réalisée, une étape S143 réalise, à partir de l'image extraite, de déterminer les coordonnées $xi, yi$ d'au moins deux points P1, P2 compris sur la ligne 9 de l'image extraite. L'étape S140 de détermination du décalage angulaire θ comporte une étape 5144 de correction de l'effet de perspective introduit par la caméra. Toutes images acquises par une caméra sont distordues lié à l'effet de perspective (introduit par la caméra), c'est-à-dire que des points de l'image ne sont pas situés au même emplacement que dans la réalité, il est donc nécessaire de corriger cet effet pour avoir un rendu plus proche de la réalité. Une étape 5145 permet de calculer plus précisément le décalage angulaire θ à partir de des coordonnées corrigées $xic, yic.$

Selon une variante de mise en oeuvre de l'étape S141 illustrée à la figure 5b, la recherche de l'extrémité libre s'effectue dans une zone 12 qui comprend la cible 11. Cette variante de mise en oeuvre permet de réduire les moyens de calcul (mémoire et puissance de calcul) nécessaire à la réalisation de l'étape tout en améliorant la fiabilité du procédé.

Le procédé s'applique indifféremment aux zones de parcage en bataille ou en épis, seul le calcul de la trajectoire change. Le véhicule 1 comporte en outre un sélecteur permettant de choisir le type de manoeuvre correspondant à la zone de parcage.

Selon une variante de l'invention représentée à la figure 8, le procédé comporte une étape S300 de comparaison de la forme de l'extrémité à une base de données. Cette base de données comporte, par exemple, trois formes d'extrémités, une première forme 13 correspondant à un parcage en bataille, une deuxième forme 15 correspondant à un parcage en épis et une troisième forme 17 correspondant à un parcage en bataille avec charge sans contact. Ainsi il est possible d'associer un type d'extrémité libre à un type de parcage, ce qui permet de faciliter la reconnaissance de la manoeuvre à effectuer pour le véhicule 1. Selon une autre variante, il est possible, également, de mettre à jour cette base de données, par exemple en connectant la base à un servant distant.

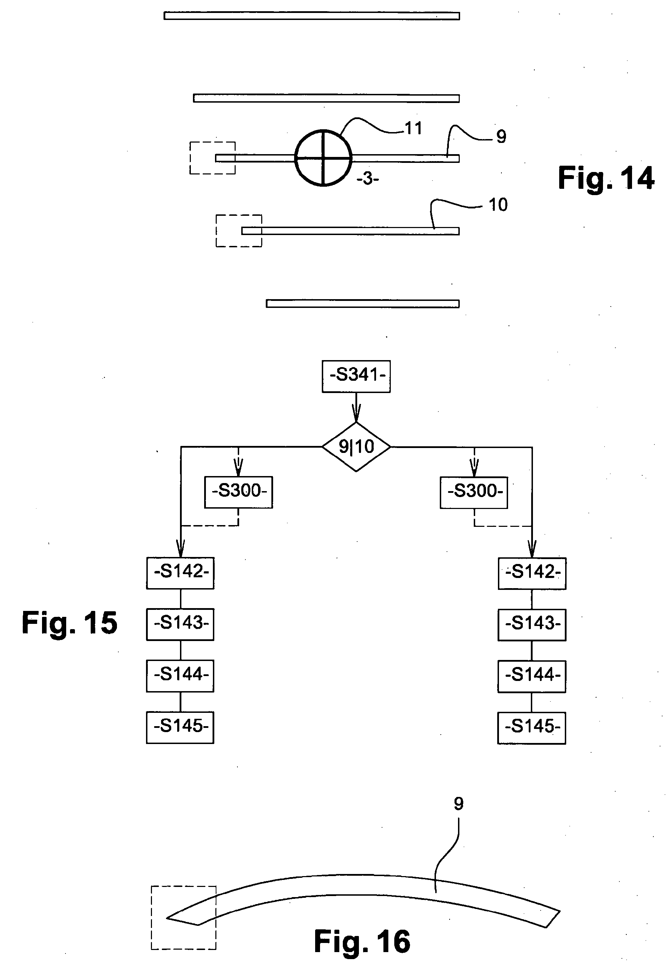

La mise en oeuvre de l'étape S300 dans le procédé permet une réduction des moyens de calcul alloués pour effectuer cette étape S300, car malgré la distorsion de l'image donc de la ligne 9 l'extrémité des lignes restent détectables directement, comme l'illustre la figure 16. Alors que dans le cas de la détection de ligne, il faut corriger l'effet de perspective de l'intégralité de l'image pour pouvoir identifier les lignes.

Une fois le décalage angulaire θ déterminé, il est possible de calculer plus précisément quelles sont les trajectoires des manoeuvres que le véhicule 1 doit effectuer pour se positionner dans l'emplacement 3.

Le procédé d'aide au parcage comporte une série d'étapes 5200 permettant de calculer la trajectoire entre la position courante du véhicule 1 et une position de stationnement, cette trajectoire dépendant du décalage angulaire θ calculé.

Pour la suite du procédé, l'hypothèse concernant la définition la valeur de l'angle θ a été émise comme suit :

- θ > 0, si l'arrière du véhicule est plus proche, que l'avant du véhicule, du fond de l'emplacement, et

- θ < 0, si l'avant du véhicule est plus proche, que l'arrière du véhicule, du fond de l'emplacement.

Les formules de calcul de la trajectoire du véhicule tiennent compte de cette définition de l'angle θ dans les formules. En cas de modifications des formules, l'homme du métier devra tenir compte de cette hypothèse pour la mise en oeuvre de l'invention.

Afin de mieux comprendre cette partie de l'invention, les figures 9 à 12 représentent le cas usuel de l'agencement du véhicule 1 par rapport à l'emplacement 3, ces représentations permettent d'illustrer des caractéristiques techniques de l'invention.

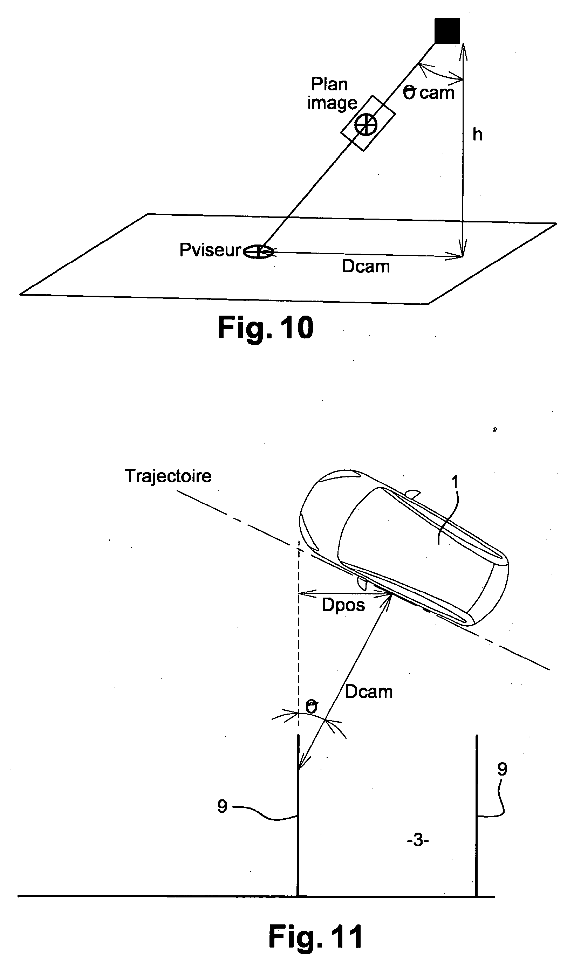

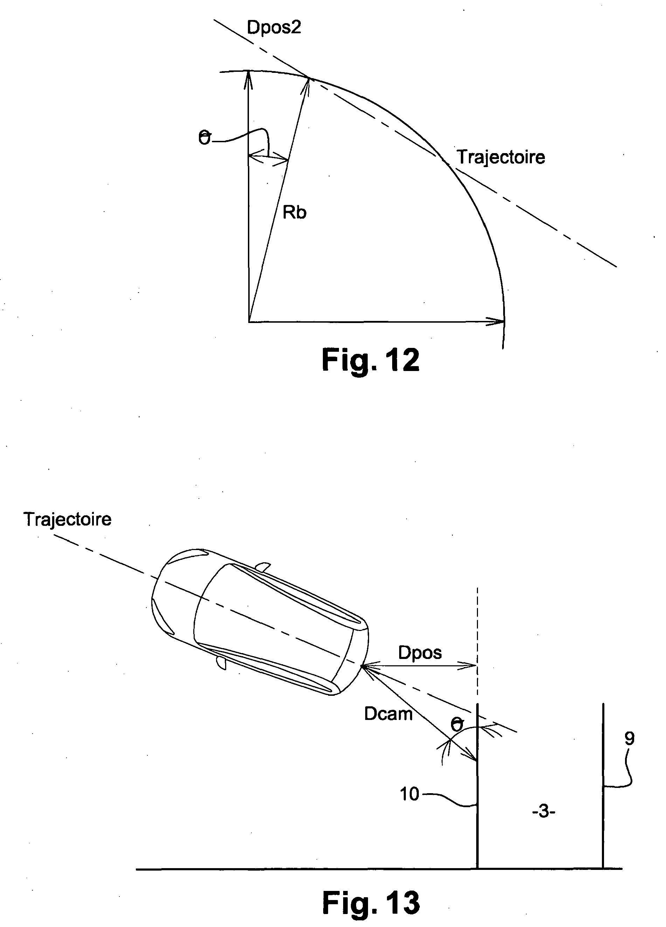

Le décalage angulaire θ initial est source d'erreur pour le calcul de la première et de la deuxième manoeuvre. En effet, le décalage angulaire θ induit une erreur de distance Dpos lors de l'étape S120 de validation de l'alignement (cf. figure 11), ce qui modifie la valeur de la distance de d1. De même le décalage angulaire impact la trajectoire du véhicule 1, pour la deuxième manoeuvre, en ce que le véhicule 1 ne doit plus effectuer une trajectoire sur 90° mais sur 90° ± θ (cf. figure 12) qui peut être traduit par une distance Dpos2.

La détermination de d1 fait intervenir plusieurs paramètres dont notamment la trajectoire de la deuxième manoeuvre. On comprend bien que la trajectoire de la deuxième manoeuvre dépend directement de la position du véhicule 1 à l'issu de la première manoeuvre.

Il est donc nécessaire de déterminer Dpos ainsi que la trajectoire de la deuxième manoeuvre.

L'implantation de la caméra sur le véhicule 1 est connue: on connaît donc la hauteur h de la caméra par rapport au sol, ainsi que l'angle d'incidence θcam par rapport au sol. Ces deux paramètres, couplés à la connaissance de la position de la cible 11 dans l'image permettent de recalculer avec précision la position du point projeté du viseur au sol Pviseur, et donc de déterminer une distance Dcam entre le point projeté du viseur au sol et la caméra. On exprime alors une fonction f telle que:

$$Dcam = f\ (Xim,\ Yim,\ h,\ \theta cam)$$

où Xim et Yim sont les coordonnées en pixel de la position de la cible 11 dans l'image affichée sur l'IHM.

La figure 11 représente le véhicule 1 dans sa position à l'étape S120 de validation, dans cette configuration et connaissant la distance Dcam, il est possible d'exprimer la différence de distance Dpos comme suit:

$$Dpos = Dcam \times sin\ \theta$$

Si l'on projette cette distance sur la trajectoire du véhicule 1 on obtient :

$$Dpos\_proj = (Dcam \times sin\ \theta)/cos\ \theta$$

Calcul de la trajectoire D2 :

En partant du cas général représenté à la figure 1, le véhicule 1 effectue la deuxième manoeuvre les roues braquées au maximum, appliqué à notre mode de réalisation Il faut effectuer cette manoeuvre sur 90° ± θ. Donc selon la valeur de θ la distance *d1nomi* à parcourir lors de la première manoeuvre doit varier d'une distance Dpos2, et est donnée par la formule suivante :

$$d1nomi - Dpos2 = d1nomi - Rbmax \times sin\ \theta$$

avec *Dpos2 = - Rbmax x sin θ*

Si l'on projette ces distances sur la trajectoire du véhicule, on obtient :

$$(d1nomi - Rbmax \times sin\ \theta)/cos\ \theta$$

La somme des distances projetées sur la trajectoire, donne l'équation générale de la distance D1calc :

$$d1_{calc} = \frac{d1_{nomi} - Rb\max \times \sin\vartheta + Dcam \times \sin\vartheta}{\cos\vartheta}$$

Le procédé comporte une étape S201 de recherche de la valeur de la première distance d1nomi à parcourir lors de la première manoeuvre si le véhicule 1 ne comporte pas de décalage angulaire θ par rapport à l'emplacement 3, distance représentée aux figures 1 et 2.

Le procédé comporte une étape S210 de calcul d'une deuxième distance d1calc qui dépend de la première distance d1nomi et du décalage angulaire θ.

Le procédé comporte une étape S220 d'acquisition par des capteurs roues d'une distance parcourue d1mes par le véhicule 1 lors de la première manoeuvre.

Le procédé comporte une étape S230 de calcul de la différence Δd1 entre la distance parcourue d1mes lors de la première manoeuvre et la deuxième distance calculée d1calc.

Toute différence Δd1, a un impact sur le calcul de la trajectoire de la deuxième manoeuvre. On se rend compte qu'en gardant une valeur de rayon de braquage maximale Rbmax des roues, la trajectoire ne change pas donc la position finale du véhicule 1 dans l'emplacement 3 est juste décalé latéralement. Pour palier à cet inconvénient, il a été établi une table de correspondance entre la différence Δd1 et une valeur d'angle volant correctrice θvol1. A cette fin, le procédé comporte une étape S231 de correspondance entre la différence Δd1 et la valeur d'angle volant correctrice θvol1.

Le procédé comporte une étape S240 de détermination de la trajectoire lors de la deuxième manoeuvre selon le décalage angulaire θ et la différence de distance Δd1.

Ceci présente l'avantage de limiter l'addition des erreurs à chacune des étapes, en conséquence la précision du procédé en est améliorée.

La réalisation de cette étape fait appel à une sous étape S241 de calcul du rayon de braquage des roues Rb dépendant de la valeur de l'angle volant correctrice θvol1.

Dans le mode de réalisation représenté l'étape S240 de détermination de la trajectoire de la deuxième manoeuvre met en oeuvre la formule suivante :

$$d2 = (90 \pm \theta) \times Rb\,(\theta vol)$$

$$\theta vol = \theta volmax - \theta vol1$$

$$\theta vol1 = f\,(\Delta d1)$$

Où θ est le décalage angulaire θ du véhicule 1 par rapport à l'emplacement 3, θvol est l'angle volant lors de la deuxième manoeuvre, θvol1 est l'angle lié à la distance d'erreur Δd1et Rb est le rayon de braquage des roues correspondant à l'angle volant θvol.

Dans le mode de réalisation représenté, l'acquisition de la valeur de l'angle volant est obtenue par le capteur d'angle volant (non représenté), le calculateur peut remonter sur l'IHM la valeur courante de l'angle volant ainsi que la valeur de l'angle volant à atteindre θvol.

La troisième manoeuvre correspondant au parcours d'une distance d3, peut être calculée à partir des distances d1mes et d2. Afin d'amélioré la précision du procédé, et que celle-ci soit inférieure à 10 cm, l'emplacement comporte deux butés situé dans le fond de l'emplacement 3, c'est-à-dire à la partie de l'emplacement 3 la plus éloignée de la voie de circulation. Ainsi la précision dépend uniquement du positionnement latéral du véhicule 1 dans l'emplacement 3, ce qui est très intéressant dans le cadre de la charge sans contact.

Selon un mode de réalisation non représenté, une représentation de la scène en vue de dessus peut être affichée sur l'IHM. Il peut être affiché par ce moyen les distances d1calc, d2 restant à parcourir au cours des différentes manoeuvres. Selon un mode de réalisation alternatif ou complémentaire les différentes informations liées aux manoeuvres peuvent être transmises par tout autre système visuel (led sous la peau du volant, ...) ou encore par des instructions audio.

Selon une variante représentée aux figures 13 à 15, qui diffère du mode de réalisation principal, en ce que le véhicule 1 comporte une unique caméra en position centrale arrière et que la détermination du décalage angulaire θ s'effectue à partir des extrémités de deux lignes.

La figure 13 représente le véhicule 1 dans sa position à l'étape S120 de validation, en effectuant le même raisonnement que celui effectué à la figure 11, la différence de distance Dpos s'exprime manière analogue :

$$Dpos = Dcam \times \sin \theta$$

Si l'on projette cette distance sur la trajectoire du véhicule 1 on obtient:

EP 2 788 246 B1

$$Dpos\_proj = (Dcam \times \sin \theta)/\cos \theta$$

La figure 14 représente une image transmise par la caméra arrière. Sur cette image transmise la position latérale de la cible 11 est commandée par l'activation du clignotant comme dans le mode de réalisation principal. L'étape de détermination du décalage angulaire θ est effectuée sur les deux extrémités libres des lignes 9, ceci permettant d'améliorer la robustesse du dispositif. La deuxième extrémité est recherchée au sein d'une zone autour de la première extrémité afin de réduire le temps de calcul.

Dans le cadre de l'application de cette variante, comme représenté à la figure 15, l'étape S140 de détermination du décalage angulaire θ se différencie du mode de réalisation principal en ce que l'étape S141 de recherche de l'extrémité libre est remplacée par une étape 5341 de recherche des extrémités libres de la ligne 9 de marquage qui coïncide avec la cible 11 et de la ligne 10 de marquage située immédiatement avant la ligne 9 de marquage qui coïncide avec la cible 11. Les autres sous étapes relatives au traitement de l'image en vue de la détermination du décalage angulaire θ change juste en ce que le traitement est effectué sur chacune des sous matrices relatives aux extrémités. Comme représenté à la figure 15, les sous étapes S142 à S145 sont effectuées en parallèles sur chacune des extrémités des lignes 9, 10.

L'une des différences de ce mode de réalisation est que la position sur la voie de circulation du véhicule 1 à l'étape S120 de validation est différente. Le calcul de la distance d1 doit tenir compte de cette différence de position en ajoutant une constante de correction. Cette constante de correction peut être déterminée par calcul ou par expérimentation en comparant la position d'un véhicule 1 comportant des caméras latérales et une caméra central.

Selon un mode de réalisation non représenté, la cible peut être commandée dans l'IHM (par exemple par une commande du type commande de rétroviseurs, par un écran tactile, ...). En complément de ce mode de réalisation non représenté, la cible 11 peut être fixe au début du procédé, et devenir mobile dans le cas où l'étape S141 de recherche de l'extrémité libre ne permet pas de reconnaître une extrémité pour proposer au conducteur de pointer la cible 11 mobile sur l'extrémité.

Selon un autre mode de réalisation, l'ordre de ces sous étapes peut différer en ce que la sous étape de correction de l'effet de perspective est effectuée avant celle de la détermination des deux points.

**Revendications**

**1.** Procédé d'aide au parcage pour un véhicule (1) automobile dans un emplacement (3) de stationnement disponible, du type épis ou bataille, délimité par des lignes de marquage au sol comportant au moins une caméra, **caractérisé en ce que** le procédé comporte :

- une étape d'affichage (S100) de l'emplacement (3) et d'une cible (11) sur une Interface homme-machine, ledit emplacement (3) de stationnement étant disposé sur l'un des cotés de la voie de circulation,
- une étape (S110) d'alignement de la cible (11) avec l'une des lignes de marquage au sol,
- une étape (S120) de validation de l'alignement de la cible (11) avec la ligne de marquage, l'étape (S110) d'alignement de la cible (11) étant répétée tant que l'alignement n'est pas validé,
- une étape (S130) d'acquisition par un système de l'image affiché sur l'interface homme machine,
- une étape (S140) de détermination, à partir de l'image acquise, d'un décalage angulaire (θ) entre l'orientation longitudinale du véhicule (1) par rapport à la voie de circulation, au droit de l'emplacement,
- une étape de calcul d'une trajectoire entre la position courante du véhicule (1) et une position dans l'emplacement (3) de stationnement, cette trajectoire dépendant du décalage angulaire déterminé.

**2.** Procédé d'aide au parcage selon la revendication 1, **caractérisé en ce que** l'étape (S140) de détermination du décalage angulaire comporte une étape (S141) de recherche de l'extrémité libre de ligne (9) alignée avec la cible (11)

**3.** Procédé d'aide au parcage selon la revendication 2, **caractérisé en ce que** l'étape de recherche de l'extrémité libre comporte une étape (S300) de comparaison de la forme de l'extrémité à une base de données.

**4.** Procédé d'aide au parcage selon la revendication 2 ou 3, **caractérisé en ce que** l'étape (S140) de détermination du décalage angulaire comporte une étape (S341) de recherche de l'autre extrémité libre de la ligne de marquage au sol.

**5.** Procédé d'aide au parcage selon l'une des revendications précédentes, caractérisé en que l'étape (S140) de détermination du décalage angulaire comporte une étape (S142) d'extraction d'une partie de l'image comportant une partie de la ligne.

6. Procédé d'aide au parcage selon l'une des revendications précédentes, caractérisé en que l'étape (S140) de détermination du décalage angulaire comporte une étape (S143) de détermination des coordonnées d'au moins deux points (P1, P2) compris sur la ligne de marquage au sol dans l'image extraite.

7. Procédé d'aide au parcage selon l'une des revendications précédentes, caractérisé en que l'étape (S140) de détermination du décalage angulaire comporte une étape (S144) de correction de l'effet de perspective.

8. Procédé d'aide au parcage selon les revendications 6, caractérisé en que l'étape (S140) de détermination du décalage angulaire comporte une étape (S145) de calcul du décalage angulaire à partir des coordonnées corrigées.

9. Procédé d'aide au parcage selon l'une des revendications précédentes, caractérisé en que l'étape d'affichage (S100) comporte une étape de détermination du coté du véhicule (1) où se situe l'emplacement par l'activation de l'un des clignotants par le conducteur.

10. Procédé d'aide au parcage selon l'une des revendications précédentes, **caractérisé en ce que** l'emplacement (3) et le véhicule (1) comportent chacun des moyens de charge sans contact coopérant entre eux.

**Patentansprüche**

1. Parkhilfeverfahren für ein Kraftfahrzeug (1) in einem verfügbaren Parkplatz (3) des Typs Einzelreihe oder Doppelreihe, der durch Bodenmarkierungslinien abgegrenzt ist, das mindestens eine Kamera umfasst, **dadurch gekennzeichnet, dass** das Verfahren Folgendes umfasst:

• einen Anzeigeschritt (S100) des Parkplatzes (3) und eines Ziels (11) auf einer Mensch-Maschine-Schnittstelle, wobei der Parkplatz (3) auf einer der Seiten der Fahrbahn angeordnet ist,
• einen Ausrichtschritt (S110) des Ziels (11) mit einer der Bodenmarkierungslinien,
• einen Bestätigungsschritt (S120) der Ausrichtung des Ziels (11) mit der Markierungslinie, wobei der Ausrichtschritt (S110) des Ziels (11) so lange wiederholt wird, wie die Ausrichtung nicht bestätigt ist,
• einen Erfassungsschritt (S130) durch ein System des Bilds, das auf der Mensch-Maschine-Schnittstelle angezeigt wird,
• einen Bestimmungsschritt (S140) ausgehend von dem erfassten Bild eines Winkelversatzes (θ) zwischen der Längsausrichtung des Fahrzeugs (1) und der Fahrbahn im rechten Winkel zu dem Parkplatz,
• einen Berechnungsschritt einer Bahn zwischen der aktuellen Position des Fahrzeugs (1) und einer Position in dem Parkplatz (3), wobei die Bahn von dem bestimmten Winkelversatz abhängt.

2. Parkhilfeverfahren nach Anspruch 1, **dadurch gekennzeichnet, dass** der Bestimmungsschritt (S140) des Winkelversatzes einen Suchschritt (S141) des freien Endes der Linie (9), die mit dem Ziel (11) ausgerichtet ist, umfasst.

3. Parkhilfeverfahren nach Anspruch 2, **dadurch gekennzeichnet, dass** der Suchschritt des freien Endes einen Vergleichsschritt (S300) der Form des Endes mit einer Datenbank umfasst.

4. Parkhilfeverfahren nach Anspruch 2 oder 3, **dadurch gekennzeichnet, dass** der Bestimmungsschritt (S140) des Winkelversatzes einen Suchschritt (S341) des anderen freien Endes der Bodenmarkierungslinie umfasst.

5. Parkhilfeverfahren nach einem der vorhergehenden Ansprüche, **dadurch gekennzeichnet, dass** der Bestimmungsschritt (S140) des Winkelversatzes einen Extraktionsschritt (S142) eines Teils des Bilds, der einen Teil der Linie umfasst, umfasst.

6. Parkhilfeverfahren nach einem der vorhergehenden Ansprüche, **dadurch gekennzeichnet, dass** der Bestimmungsschritt (S140) des Winkelversatzes einen Bestimmungsschritt (S143) der Koordinaten von mindestens zwei Punkten (P1, P2), die auf der Bodenmarkierungslinie in dem extrahierten Bild enthalten sind, umfasst.

7. Parkhilfeverfahren nach einem der vorhergehenden Ansprüche, **dadurch gekennzeichnet, dass** der Bestimmungsschritt (S140) des Winkelversatzes einen Korrekturschritt (S144) des Perspektiveeffekts umfasst.

8. Parkhilfeverfahren nach Anspruch 6, **dadurch gekennzeichnet, dass** der Bestimmungsschritt (S140) des Winkelversatzes einen Berechnungsschritt (S145) des Winkelversatzes ausgehend von den korrigierten Koordinaten umfasst.

9. Parkhilfeverfahren nach einem der vorhergehenden Ansprüche, **dadurch gekennzeichnet, dass** der Anzeigeschritt (S100) einen Bestimmungsschritt der Seite des Fahrzeugs (1), an der sich der Parkplatz befindet, durch Aktivieren eines der Blinker durch den Fahrer umfasst.

10. Parkhilfeverfahren nach einem der vorhergehenden Ansprüche, **dadurch gekennzeichnet, dass** der Parkplatz (3) und das Fahrzeug (1) jeweils berührungsfreie Lademittel, die miteinander zusammenwirken, umfasst.

## Claims

1. Method for assisting in the parking of a motor vehicle (1) in an available parking space (3), of the angled or perpendicular row in type, delimited by marking lines on the ground comprising at least one camera, **characterized in that** the method comprises:

   • a step of displaying (S100) the space (3) and a target (11) on a human-machine interface, said parking space (3) being arranged on one of the sides of the traffic lane,
   • a step (8110) of alignment of the target (11) with one of the marking lines on the ground,
   • a step (S120) of validation of the alignment of the target (11) with the marking line, the step (S110) of alignment of the target (11) being repeated until the alignment is validated,
   • a step (S130) of acquisition by a system of the image displayed on the human-machine interface,
   • a step (S140) of determination, from the acquired image, of an angular offset ($\theta$) between the longitudinal orientation of the vehicle (1) relative to the traffic lane, in line with the space,
   • a step of calculation of a trajectory between the current position of the vehicle (1) and a position in the parking space (3), this trajectory depending on the determined angular offset.

2. Parking assistance method according to Claim 1, **characterized in that** the step (S140) of determination of the angular offset comprises a step (S141) of searching for the free end of line (9) aligned with the target (11).

3. Parking assistance method according to Claim 2, **characterized in that** the step of searching for the free end comprises a step (S300) of comparison of the form of the end to a database.

4. Parking assistance method according to Claim 2 or 3, **characterized in that** the step (S140) of determination of the angular offset comprises a step (S341) of searching for the other free end of the marking line on the ground.

5. Parking assistance method according to one of the preceding claims, **characterized in that** the step (S140) of determination of the angular offset comprises a step (S142) of extraction of a part of the image comprising a part of the line.

6. Parking assistance method according to one of the preceding claims, **characterized in that** the step (S140) of determination of the angular offset comprises a step (S143) of determination of the co-ordinates of at least two points (P1, P2) included on the marking line on the ground in the extracted image.

7. Parking assistance method according to one of the preceding claims, **characterized in that** the step (S140) of determination of the angular offset comprises a step (S144) of correction of the perspective effect.

8. Parking assistance method according to Claim 6, **characterized in that** the step (S140) of determination of the angular offset comprises a step (S145) of calculation of the angular offset from the corrected co-ordinates.

9. Parking assistance method according to one of the preceding claims, **characterized in that** the display step (S100) comprises a step of determination of the side of the vehicle (1) where the space is located by the activation of one of the indicators by the driver.

10. Parking assistance method according to one of the preceding claims, **characterized in that** the space (3) and the vehicle (1) each comprise contactless charging means co-operating with one another.

-S10-  $F_1$  1

-S11-  1

-S12-  $F_2$  1

9          9

9   3   9

9   3   9

9   3   9

-S13-  1

-S14-  1   $d_2$ nomi

-S15-  1

$d_1$ nomi

3

$F_3$

9

3

Rb max

3

9   9

9   9

9

$F_4$

3

**Fig. 1**

**Fig. 2**

**Fig. 3**

Fig. 4

**Fig. 5a**

**Fig. 5b**

**Fig. 6**

**Fig. 7**

**Fig. 8**

-13-    -15-    -17-

$d_1$ calc

Ɵ

Dpos

Rb

-3-

9

9

$d_3$

**Fig. 9**

**Fig. 10**

**Fig. 11**

Dpos2

θ

Rb

Trajectoire

## Fig. 12

Trajectoire

Dpos

Dcam

θ

9

10

-3-

## Fig. 13

17

**Fig. 14**

**Fig. 15**

**Fig. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2093129 A2

- EP 1955904 A1